# EUROPEAN PATENT SPECIFICATION

(11) **EP 2 641 303 B1**
(45) Date of publication and mention of the grant of the patent: **21.01.2015**
(21) Application number: 10782197.7
(22) Date of filing: 17.11.2010
(51) Int. Cl.: H01S 3/13, G01J 11/00

(54) **METHOD AND DEVICE FOR SENSING A CARRIER ENVELOPE CHARACTERISTIC OF LASER PULSES, AND APPLICATIONS THEREOF**
VERFAHREN UND VORRICHTUNG ZUM ABTASTEN EINER TRÄGERHÜLLENEIGENSCHAFT VON LASERIMPULSEN, UND ANWENDUNGEN DAVON
PROCÉDÉ ET DISPOSITIF DE DÉTECTION D'UNE CARACTÉRISTIQUE D'ENVELOPPE DE PORTEUSE D'IMPULSIONS LASER, ET LEURS APPLICATIONS

(43) Date of publication of application: 25.09.2013
(73) Proprietor: Max-Planck-Gesellschaft zur Förderung der Wissenschaften e.V., 80539 München (DE)
(72) Inventor: HOMMELHOFF, Peter, 80798 München (DE); KRÜGER, Michael, 80939 München (DE); SCHENK, Markus, 81375 München (DE)
(74) Representative: Hertz, Oliver
(86) International application number: PCT/EP2010/006990
(87) International publication number: WO 2012/065617

(56) References cited:
- US-A- 3 983 437
- US-A- 4 323 811
- PETER HOMMELHOFF ET AL: "Femtosecond laser meets field emission tip a sensor for the carrier envelope phase", INTERNATIONAL FREQUENCY CONTROL SYMPOSIUM AND EXPOSITION, 2006 IEEE, IEEE, PI, 1 June 2006 (2006-06-01), pages 470-474, XP031003745, ISBN: 978-1-4244-0074-4 cited in the application
- MARKUS SCHENK ET AL: "Ultrafast coherent electron emission from ultrasharp metal tips", LASERS AND ELECTRO-OPTICS 2009 AND THE EUROPEAN QUANTUM ELECTRONICS CONFERENCE. CLEO EUROPE - EQEC 2009. EUROPEAN CONFERENCE ON, IEEE, PISCATAWAY, NJ, USA, 14 June 2009 (2009-06-14), page 1, XP031501720, ISBN: 978-1-4244-4079-5

## Description

### Subject of the invention

The present invention relates to a method and a sensor device for sensing a carrier envelope (CE) characteristic, like e. g. a carrier envelope phase (CE phase) of laser pulses. Furthermore, the present invention relates to a method of controlling a laser source device creating laser pulses, in particular for stabilizing the CE characteristic of the laser pulses. Furthermore, the present invention relates to a pulse laser device including a laser source device, in particular with stabilized CE characteristic, and the sensor device. Applications of the invention are present in the technique of controlling and using pulse lasers, in particular used for measuring or high power irradiation purposes.

### Technical background

Ultra-short light pulses can be described in the time domain using a concept of an amplitude envelope and a carrier (carrier wave formed by the electric field amplitude). The position of the carrier wave with respect to the envelope influences physical effects of the laser pulses, e.g. in light-matter-interactions or light-light-superpositions. The relative position of the carrier wave with respect to the envelope is described with the carrier envelope phase (CE phase), which is e.g. ϕ = 0 if the maxima of the carrier wave and the envelope are coincident, or ϕ = π/2, if the carrier wave is zero at the maximum of the envelope. Typically, the CE phase is changing along a pulse train of laser pulses. The time derivation of the CE phase is called CE offset frequency F_{CEO}.

In the frequency domain, ultra short light pulses are represented by a spectrum of frequency components contributing to the light pulses (so-called frequency comb). The frequency spacing between the frequency components (comb frequencies) corresponds to the repetition frequency of the laser source device. The absolute positions of the comb frequencies additionally are influenced by the CE frequency. For obtaining stabilized laser source devices, in particular creating frequency combs with stabilized comb frequencies, there is a need for controlling and stabilizing the CE phase or the CE frequency.

A conventional approach for stabilizing the CE phase is based on correlation techniques using an interferometric superposition of successive pulses in a so-called f-to-2f interferometer as described e.g. by T. Udem et al. in "Nature", vol 416, 2002, p. 233, and citations therein. The correlation technique presented a substantial contribution for the creation of highly-stabilized frequency combs. However, the correlation technique may have disadvantages in terms of complexity of the experimental setup with many expensive components and complexity of the interferometric superposition in practical applications as well as with regard to the required laser power. A second approach, which as been mentioned by L. Xu et al. in "Optics Letters" (vol. 21, 1996, p. 2008-2010), is based on the observation of a light-phase-sensitive photoemission from a metal. This photoemission mechanism was theoretically described by L. V. Keldysh in "Soviet Physics JETP" (vol. 20, 1965, p. 1307-1313), which was restricted to the consideration of photoionization of free atoms. Experimental results were obtained with the investigation of photoelectron emission from a gold surface by A. Apolonski et al. in "Physical Review Letters" (vol. 92, 2004, p. 073902-1 to 073902-4). With this experimental investigation, the measurement of the absolute value of the CE phase became available. With the further development, the solid gold surface used by A. Apolonski et al. was replaced by a sharp metal tip as described by P. Hommelhoff et al. in "Physical Review Letters" (vol. 97, 2006, p. 247402-1 to 247402-4) and in "Proceedings of the 2006 IEEE International Frequency Control Symposium" (p. 470 to 474).

According to the experiment described by P. Hommelhoff in the above IEEE 2006 publication, a pulse laser beam is focused onto a field emission tip. Electrons emitted from the field emission tip are detected with a microchannel plate electron amplifier (MCP). With a modulation of the irradiating pulse laser beam and a lock-in-amplification of the MCP signal, a modulated photoemission signal was obtained. Resulting from numerical simulations, a photoemission signal dependency on the CE phase was assumed. P. Hommelhoff et al. have proposed to use the field emission tip as a sensor for the CE phase. However, a CE phase detection was not experimentally verified. Practical limitations have been found, in particular in terms of the required average laser power of about 500 mW and an insufficient modulation depth of the lock-in-signal.

US 4 323 811 and US 3 983 437 disclose radiation detectors including cone or plate shaped photo-cathodes, which emit primary and secondary electrons in response to an irradiation. Retarding fields are provided for suppressing the secondary electrons.

### Objective of the invention

The objective of the invention is to provide an improved method of sensing a CE characteristic of laser pulses, which is capable of avoiding disadvantages of conventional CE phase sensing techniques. In particular, the objective of the invention is to provide the sensing method based on a photoemission measurement with improved sensitivity, improved re-reproducibility, reduced requirements with regard to laser pulse power and/or reduced complexity of the detector setup. Another objective of the invention is to provide an improved method of controlling a laser source device creating ultra short laser pulses, which is capable of avoiding disadvantages of conventional controlling techniques, in particular in terms of complexity of detecting a control signal being characteristic of the CE phase. Furthermore, the objective of the invention is to provide an improved sensor device for sensing the CE characteristic of laser pulses, being capable of avoiding disadvantages of conventional CE phase sensors. Finally, another objective of the invention is to provide an improved pulse laser device being capable of self-referenced stabilization of laser pulse parameters, in particular the CE phase.

### Brief summary of the invention

These objectives are solved with methods and/or devices comprising the features of the independent claims. Preferred embodiments of the invention are defined in the dependent claims.

According to a first aspect of the invention, a method of sensing a carrier envelope characteristic, like e. g. the CE phase or CE offset frequency, of laser pulses having a pulse duration below 25 fs and a pulse energy below 200 pJ is provided, wherein the laser pulses are focused onto at least one emitter tip of an electron emitter device, set at least one emitter tip having a tip radius equal or below 100 nm, an electron current of emitted electrons is collected with an electron collector device and a photoemission signal is generated, which depends on the carrier envelope characteristic of the laser pulses. The photoemission signal is a direct function of the CE phase of the laser pulses. The photoemission signal is directly modulated according to the CE characteristic. According to the invention, the emitted electrons are subjected to an electrical field barrier created before the electron collector device. If emitted electrons have sufficient energy for being capable of passing the electrical field barrier, these electrons are collected with the electron collector device. The remaining electrons having a lower energy, which is not sufficient for passing the electrical field barrier, are not collected with the electron collector device. As a surprising finding of the inventors, the collected electrons passing the electrical field barrier yield the characteristic photoemission signal with a substantially reduced average power of the laser pulses compared with the conventional photoemission techniques. As an example, the required average power of the laser pulses for CE phase sensing was reduced from about 100 mW to about 10 mW or even lower, e. g. down to 1 mW. Furthermore, it has been found that the modulation depth of the photoemission signal is substantially increased (e.g. up to 30...40 %) compared with the insufficient modulation depth observed with the technique described by P. Hommelhoff et al. (cited above).

In other words, the invention generally is based on sensing electrons, which are emitted from the electron emitter device, which provides at least one cathode. The emitted electrons are accelerated towards the electron collector device. Contrary to the conventional technique, the field barrier device provides an anode, and a counter field (retarding field) is created between the field barrier device and an electron collector electrode of the electron collector device. Emitted electrons, which arrive at the field barrier device with sufficient energy are capable of moving against the counter field towards the electron collector electrode.

The electrical field vector of the carrier wave of the laser pulses determines the photoemission of electrons from the electron emitter device. Accordingly, the detected electron current is a direct measure of the carrier wave of the laser pulses. This allows the detection of e. g. the CE phase or any other related carrier envelope phase parameter. With this regard, the term "carrier envelope characteristic" refers to a quantity, which represents the relative position of the carrier wave and the envelope of the laser pulses, like e. g. the CE phase or the CE offset frequency, including quantities derived therefrom. Stabilizing the CE offset frequency may be preferred over stabilizing the CE phase, as an alternating signal is controlled in the first case rather than a dc signal in the second case. Furthermore, controlling the CE offset frequency facilitates the elimination of slow drifts, like e. g. temperature drifts.

According to a second aspect of the invention, a method of controlling a laser source device creating laser pulses is provided, wherein the carrier envelope characteristic of the laser pulses is sensed using the method of the above first aspect and the laser source device is controlled using the photoemission signal of the electron collector device. The inventors have found that advantageously the photoemission signal, i.e. the quantitative amount of collected electrons passing through the field barrier, can be used for controlling the laser source device. With the photoemission signal, at least one operation parameter of the laser source device is adjusted, so that in particular the CE phase can be stabilized.

According to a third aspect of the invention, a sensor device for sensing the carrier envelope characteristic of laser pulses is provided, which comprises an electron emitter device and an electron collector device. The electron emitter device comprises at least one emitter tip having a pointed shape having a tip radius equal or below 100 nm is arranged in an environment of reduced pressure for an irradiation with the laser pulses having a pulse duration below 25 fs and a pulse energy below 200 pJ. In response to the irradiation, electrons are emitted from the electron emitter device. The electron collector device is arranged in the environment of reduced pressure as well. It is configured for detecting an electron current of the emitted electrons and generating an photoemission signal being characteristic of the carrier envelope characteristic of the laser pulses. According to the invention, the electron collector device includes a field barrier device, which is arranged along the flight path of the emitted electrons from the electron emitter device to the electron collector device. The electron collector device with the field barrier device are configured for subjecting the electrons to an electrical field barrier before the detection with the electron collector device. As an advantage, the provision of the field barrier device results in an essentially improved performance of the sensor device as the photoemission signal can be generated with an increased modulation depth. Simultaneously, the photoemission signal can be generated with laser pulses having a reduced average power. Furthermore, the sensor device has the advantage of a compact structure, which can be integrated under practical conditions.

According to yet another aspect of the invention, a pulse laser device is provided, which comprises a laser source generating ultra short laser pulses and the sensor device according to the above third aspect of the invention. A control loop is realized wherein the laser source is controlled in dependency on a signal obtained with the sensor device. Advantageously, the pulse laser device represents a completely self-referenced, stabilized apparatus, wherein CE characteristic stabilization can be implemented without the conventional interferometric correlation techniques.

According to a preferred embodiment of the invention, the electrical field barrier is created between an electrode structure of the field barrier device the electron collector device with a direct voltage source with an amplitude selected in dependency on material, e. g. contact potential, and geometrical features, like shape and size, e. g. radius of curvature of the at least one electron emitter tip. In a practical implementation, adjusting the electrical field barrier in dependency on a test measurement can be provided. As preferred examples, the electrical field barrier may have an amount above 0.5 V, particularly preferred above 1 V, and below 20 V, particularly preferred below 15 V.

According to preferred embodiments of the invention, the electron emitter device comprises one single emitter tip or a plurality of emitter tips. The term "emitter tip" refers to an electrically conducting element having an exposed point- or needle-shaped surface. Preferably, the emitter tip is made of a metal or a semiconductor or a combination thereof. As examples, the emitter tip may consist of a metal or a semiconductor or a tip body carrying a coating made of a metal or a semiconductor. According to a further particularly preferred embodiment of the invention, at least one emitter tip is used having a tip radius equal or below 50 nm, e. g. equal or below 30 nm. Accordingly, a field enhancement is obtained at the electron emitter tip such that the laser electric field is substantially increased resulting in an increased photoemission.

According to preferred variants the electron emitter device comprises at least one metal rod tip, in particular made of tungsten, gold or hafnium carbide, at least one nano-particle arranged on a carrier substrate, or at least one nano-needle arranged on the carrier substrate. Using a plurality of rod tips, nano-particles or nano-needles allows a simultaneous irradiation of a plurality of tip-shaped structures with one single beam of laser pulses. Even with a focussed irradiation, a beam diameter of e. g. 500 nm to 1 µm may irradiate a plurality of emitter tips, thus increasing the current of emitted electrons.

According to preferred embodiments of the invention, the laser pulses have at least one of the following characteristics. Advantageously, the pulse duration is comparable with the carrier oscillation cycle. Preferably, the pulse duration is shorter than 5 optical oscillation cycles, preferably shorter than 3 optical oscillation cycles of the electric field amplitude. Accordingly, depending on the centre wavelength of the laser pulses, the pulse duration (intensity full-width at half maximum (FWHM)) may be below 10 fs, preferred below 8 fs (e. g. for pulses created by a Ti-sapphire laser), or below 20 fs (e. g. for pulses created by an Erbium-fibre laser). As a further advantage, the inventive technique is not restricted to the application with laser pulses having a frequency octave spanning spectrum. It is even preferred to stabilize CE characteristics of laser pulses having a frequency spectrum which is narrower than a frequency octave (f, 2f).

Furthermore, the pulse energy of the laser pulses focused onto the electron emitter tip is below 200 pJ, in particular below 150 pJ. Furthermore, the pulse intensity on the electron emitter tip is preferably below 10¹² W/cm². These parameters represent an essential reduction compared with the conventional techniques. In particular, depending on the application of the laser pulses, a portion of the initially created laser pulses can be used for the inventive CE characteristic sensing while the remaining laser pulse energy can be used for a particular application, e.g. for an interaction of the laser pulses with matter.

The laser source device generating the laser pulses may comprise any pulse laser source, like e.g. a cw laser pumped solid state laser with mode locking, optionally combined with further pulse amplifying and/or pulse shaping components. Controlling the laser source device according to the invention means that any operation parameter of the laser source device is adjusted in dependency on the photoemission signal. According to a preferred embodiment of the invention, the CE characteristic is stabilized using the photoemission signal. In particular, for controlling the operation of the laser source device, it includes an adjustment device, which is configured for setting the carrier envelope characteristic of the laser pulses. According to the invention, an output of the sensor device, optionally mixed with a reference signal, is coupled with this adjustment device. For controlling the laser source device, at least one of the following control measures can be provided at the laser source device. Firstly, the pump power applied to the mode-locked solid state laser is controlled using the photoemission signal. Additionally or alternatively, a control of resonator finesse of the laser can be provided. For particular applications of the invention, it may be preferred to control the laser source device such that the CE phase is 0 or n/2.

Advantageously, multiple metal materials are available for providing the at least one emitter tip of the electron emitter device. Preferred examples comprise tungsten, particularly preferred with 310, 111 or 110 orientation relative to a longitudinal tip axis, gold or hafnium carbide, or semiconductors, like Si.

As a further advantage, there are no restrictions with regard to the type of the electron collector device. According to preferred embodiments of the invention, the electron collector device may comprise a single collector electrode, which has advantages in terms of a simple structure of the sensor device, a micro-channel plate or an electron multiplier, which may have advantages in terms of the detection sensitivity.

The field barrier device used according to the invention may comprise any electrode structure, which is transmissive for the emitted electrons so that they are able to move against the counter field of the electron collector device. According to a preferred embodiment of the invention, the field barrier device comprises at least one mesh electrode or a grid electrode, which have openings or through holes through which the emitted electrodes can pass. Alternatively, an electrode plate having one single through hole or a plurality of through holes can be provided.

According to the invention, the emitted electrons are collected in an environment of reduced pressure. Particular advantages in terms of a compact device design are obtained, if the electron emitter device and the electron collector device are arranged in a closed vacuum cell. The sensor device can be miniaturized down to the shape of a conventional electron tube or smaller, i. e. to a characteristic cross-sectional dimension below 10 cm, preferably below 5 cm, e. g. below 2 cm.

### Brief description of the drawings

Further details and advantages of the invention are described in the following with reference to the attached drawings, which show in:
- Figures 1 and 2: schematic illustrations of features of preferred embodiments of the sensor device and laser source device of the invention;
- Figure 3: schematic illustrations of electron emitter devices used according to the invention;
- Figure 4:: a graphic representation of the field barrier effect used according to the invention; and
- Figure 5:: a comparison of experimental results obtained with the invention and a conventional technique, resp..

### Preferred embodiments of the invention

Preferred embodiments of the invention are described in the following with exemplary reference to the combination of a laser source device with an electron collector device including a field barrier device. Details of available laser source devices creating laser pulses are not described as they are known as such. Furthermore, it is emphasized that the description is based on a sensor structure as it is described in the publication of P. Hommelhoff et al. in IEEE 2006 (cited above). Details of the P. Hommelhoff et al. technique can be used as they are described in the above publication. It is emphasized that the implementation of the invention is not restricted to the use of the schematically shown sensor device, but rather can be realized with modified sensor devices including the electron emitter device, e. g. including other variants of one or more emitter tip(s), and the electron collector device with the field barrier device. While exemplary reference is made to the CE phase control in the following, the invention can be correspondingly implemented for controlling the CE offset frequency.

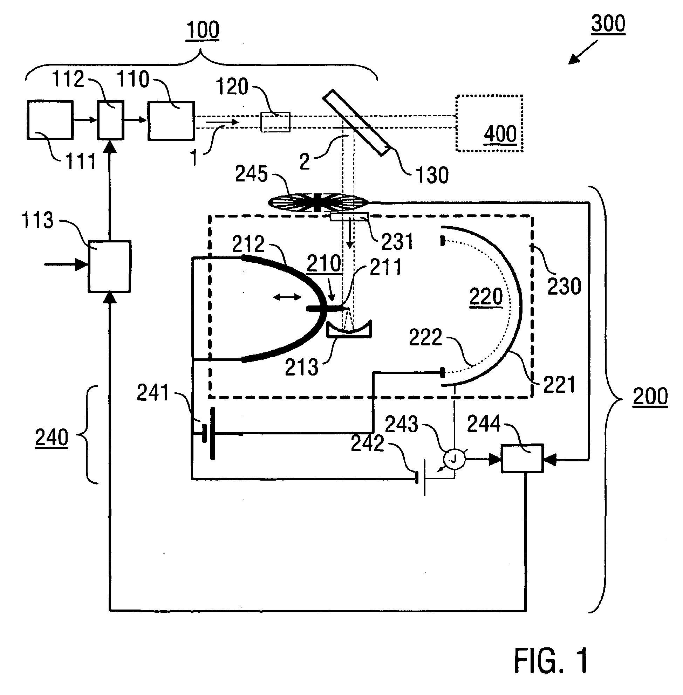

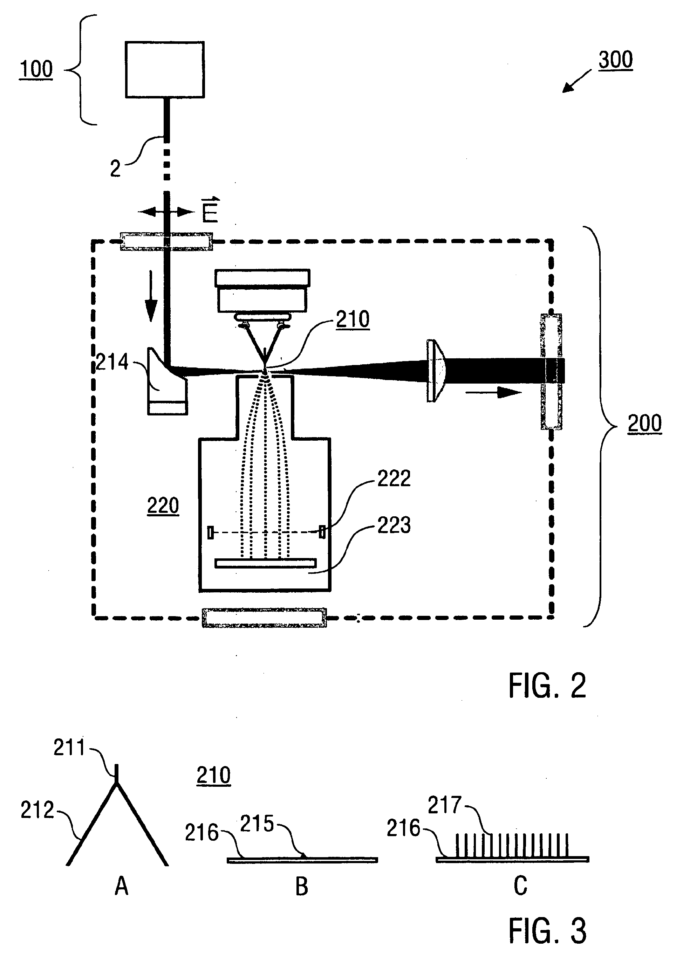

According to Figure 1, a pulse laser device 300 of the invention comprises a laser source device 100 and a sensor device 200 including the electron emitter device 210. In the illustrated example, the electron emitter device 210 comprises a single emitter rod tip 211 (metal rod tip 211). Other emitter embodiments are possible as shown e. g. in Figure 3.

The laser source device 100 includes a Kerr-lens mode-locked Ti:sapphire pulse laser 110 (manufacturer: Nanolayers Ven-teon), which is pumped with a solid-state diode-pumped, frequency-doubled Nd:YVO₄ pumping laser 111 (manufacturer: Coherent Verdi V-10). An optical power control unit 112 is provided between the pumping laser 111 and the pulse laser 110. The optical power control unit 112 comprises e. g. an acousto-optic modulator, which is adapted for modulating the pump power input to the pulse laser 110 in dependency on a control signal obtained from the sensor device 200.

Furthermore, the laser source device 100 comprises a polarization adjustment unit 120 and a deflecting mirror 130. The polarization adjustment unit 120 is adapted for adjusting the polarization vector of the laser pulses 1 emitted by the laser 110. The laser pulses 1 are adjusted such that the polarization vector thereof is in parallel with the longitudinal extension of the emitter rod tip 211 of the sensor device 200 (see below). The deflecting mirror 130 is a plain, semi-transmissive mirror, which deflects a portion of the laser pulses 1 (sample beam 2) towards the sensor device 200, while the remaining porting of the laser pulses 1 is transmitted to a schematically illustrated region of application 400, e.g. a measuring device or another optical device. With a preferred feature, which can be implemented according to the invention, the sample beam 2 is deflected without refractive focusing elements to the emitter rod tip 211. Thus, distortions of the laser pulses can be avoided.

The sensor device 200 comprises the emitter rod tip 211 and an electron collector device 220, which are arranged in a pressure tight container 230. Furthermore, a detector circuit 240 is provided, which is arranged for creating operation voltages, measuring the collected electron current and generating a photoemission signal to be used for controlling the laser source device 100.

The emitter rod tip 211 comprises a tungsten tip, which has a longitudinal tip extension above 100 µm, e. g. above 500 µm, and below 5 mm, e. g. below 2 mm, and a tip apex with a radius of curvature above 10 nm, and below 1 µm. The emitter rod tip 211 is made of mono crystalline tungsten, which has (310)-orientation relative to the longitudinal direction of the emitter rod tip 211. Alternatively, non mono crystalline tungsten can be used. The emitter rod tip 211 is supported by a tip holder 212 having e.g. a frame or arc shape, which is adapted for resistance heating the rod tip. Thus, the rod tip can be annealed in the sensor environment for cleaning purposes. The position of the tip holder 212 with the emitter rod tip 211 can be adjusted (see double arrow) so that the tip apex is positioned in the focus of the sample beam 2. The adjustment of the tip holder 212 is an optional feature of the invention. Alternatively, the adjustment of the tip apex in the focus of the sample beam 2 can be obtained by moving the container 230 relative to the laser source device 100.

Preferably, at least one reflective element is used for focusing the sample beam 2 onto the emitter rod tip 211. The reflective element comprises a spherical mirror 213 in the container 230 and/or another spherical mirror (not shown) arranged outside the container 230. The spherical mirror 213 is arranged near the tip apex of the emitter rod tip 211, and it has a high-reflecting surface, e.g. made of gold. With the spherical mirror 213, the sample beam 2 light is reflected and focused to the tip apex so that a spot radius of about 4 µm (1/e²) or even down to 2 µm is obtained.

The electron collector device 220 comprises a collector electrode 221 and a field barrier device 222. The collector electrode 221 has a cup-shape. Optionally, a hemi-spherical shape can be provided, wherein the emitter rod tip 211 can be positioned such that the tip apex is in the center of the collector electrode 221. However, an out-of-center arrangement (as shown in Figure 1) as well as one or more plane collector electrode(s) 221 (see Figure 2) can be used as well.

The field barrier device 222 comprises a mesh electrode (or grid electrode), which is arranged between the emitter rod tip 211 and the collector electrode 221. A curved electrode shape can be provided as shown, or a plain electrode shape can be used as an alternative. As an example, the field barrier device 222 is made of a metal grid, e. g. Cu grid, formed of wires having a diameter of 25 µm and leaving through holes having a diameter of 50 µm.

Both of the emitter rod tip 211 and the electron collector device 220 are accommodated in the container 230, which is configured for providing a reduced pressure. As an example, the container 230 can be connected with a vacuum system (not shown). Alternatively, a closed container 230 can be provided, which is evacuated and closed after assembling the sensor device 200. In this case, preferably a getter material is enclosed in the container 230. The wall of the container 230 (shown with dashed line) is made e.g. from glass or metal. A vacuum window 231 is provided for in-coupling the sample beam 2 into the container 230. The vacuum window 231 is made of e.g. glass. The thickness of the window is selected in dependency on the practical structure provided for implementing the invention, in particular in dependency on the diameter of the window. The thickness is e. g. 3 mm to 4 mm, or with minimized window diameter even 1 mm or lower, e. g. 0.1 mm.

The detection circuit 240 comprises a first voltage source 241, which is connected with the emitter rod tip 211 and the field barrier device 222 such that the emitter rod tip 211 provides a cathode and the field barrier device 222 provides an anode. As an example, a direct voltage of about 5 to 1000 V is applied to the components 210, 222 using the first voltage source 241. Furthermore, a second voltage source 242 is provided, which is adapted for applying a retarding field between the field barrier device 222 and the collector electrode 221. As an example, a direct voltage in the range of 0.5 V to 20 V is applied by the second voltage source 242.

A current detector 243 is provided for measuring the quantity of electrons, which are capable to reach the collector electrode 221 through the field barrier created by the field barrier device 222. The detected current signal is converted into a voltage signal using an amplifier 244, wherein the voltage signal represents the photoemission signal (control signal) to be coupled into the laser source device 100.

Optionally, a modulator comprising a chopper wheel 245 can be provided in front of the vacuum window 231 for modulating the sample beam 2 according to a modulation frequency. In this case, the amplifier 244 would comprise a lock-in-amplifier used for lock-in-amplifying the detected current of emitted electrons. However, this lock-in-technique represents an optional feature of the CE phase sensing only. As an advantage of the invention, the photoemission signal being modulated according to the CE phase can be measured without the lock-in-technique.

For sensing the CE phase of the laser pulses 1, the following steps are implemented. Firstly, the emitter rod tip 211 is irradiated with the sample beam 2. With an output power of the laser 110 of about 500 mW and a power of the sample beam 2 in front of the vacuum window 231 of about 10 mW, and the tip apex radius of about 30 nm, a laser electric field of up to 3 GV/m is expected at the tip apex in consideration of a field enhancement due to the small dimensions of the tip apex. Electrons emitted from the emitter rod tip 211 are detected with the electron collector device 220. The field barrier created with the field barrier device 222 is adjusted such that a high pass filter is provided through which only electrons having an energy above a predetermined threshold can pass. The frequency and phase of the photoemission signal is directly related to the frequency and phase of the carrier wave of the laser pulses. The photoemission signal is coupled into the laser source device 100 such that the laser 110 is operated with a stabilized CE phase. With further details, for controlling and stabilizing the CE phase, the photoemission signal obtained with the sensor device 200 is supplied to a frequency mixer unit 113, where the photoemission signal is superimposed with a reference signal. The superimposed signal is supplied to the optical power control unit 112. The reference signal is generated with an external reference frequency generator.

Figure 2 schematically illustrates an alternative embodiment of the pulse laser device 300 including the laser source device 100 and the sensor device 200, which has a similar structure like the embodiment of Figure 1, but some differences with regard to the in-coupling of the sample beam 2 and the type of the electron collector device 220 (electrical circuitries are omitted in the illustration of Figure 2). Accordingly, the sample beam 2 is coupled via a parabolic mirror, having a reflecting surface made of e. g. Au, to the electron emitter tip 210. The irradiation geometry of Figure 2 has advantages in terms of excluding eventual distortions due to a back-reflection of the sample beam onto the emitter tip (Figure 1). Furthermore, the focused illumination, using e.g. the 90° parabolic mirror allows to reduce the diameter of the laser beam spot on the emitter rod tip so that the average laser power of the sample beam used for sensing the CE characteristic can be reduced, e. g. down to 1 mW.

Furthermore, the electron collector device 220 comprises a MCP 223, the output signal of which is integrated for creating the photoemission signal. With this embodiment, the field barrier device 222 comprising multiple plane electrodes, like in an electron spectrometer, is arranged in front of the MCP 223.

Figure 3 illustrates preferred variants of the electron emitter device used according to the invention. According to Figure 3A, a metal rod tip 211 is illustrated on a tip holder 212 as shown in Figures 1 and 2. According to Figure 3B, at least one nano-particle 215 is arranged on a carrier substrate 216. As an example, an Au or Ag particle having a diameter in the range of 20 nm to 200 nm is arranged on an electrically conducting surface of the carrier substrate 216, which is connected with a voltage source (see Figures 1 and 2). Multiple nano-particles 215, e. g. up to 1000 nano-particles can be arranged on the carrier substrate 216 for a simultaneous irradiation thereof. Finally, according to Figure 3C, at least one nano-needle 217 can be arranged on the carrier substrate 216. Each nano-needle 217 being made of Au or Ag has a diameter of e. g. 5 nm up to 5 µm. The nano-particles 215 or nano-needles 217 are preferably arranged with a mutual distance of directly neighbouring tips which is large enough so that there is no resonance interaction therebetween. The nano-particles 215 or nano-needles 217 can be manufactured lithographically as it is known in conventional nano-techniques.

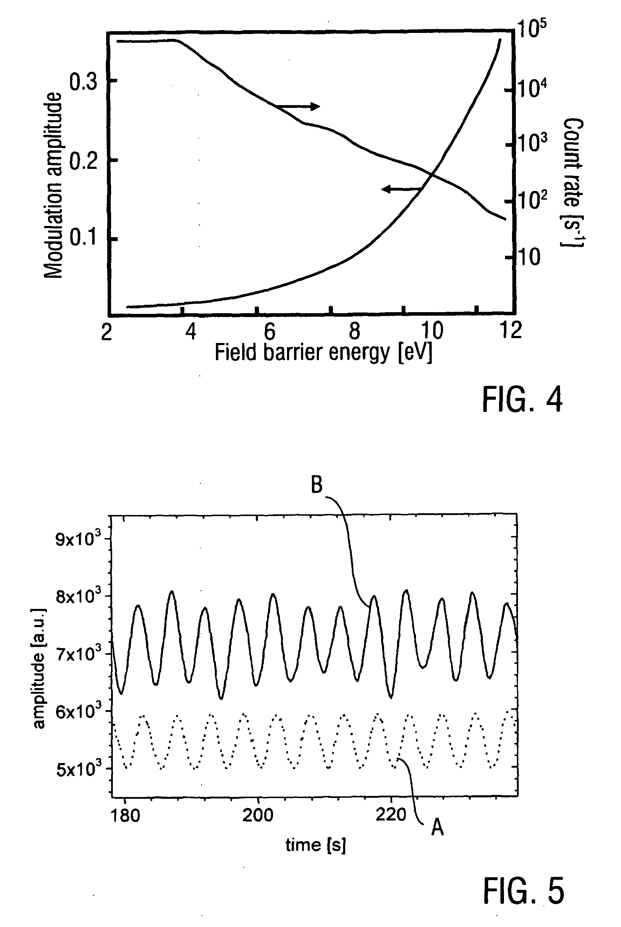

Figure 4 illustrates experimental results collected by the inventors with the embodiment of Figure 2. With an increasing field barrier (increasing retarding voltage between the components 222 and 221), the relative modulation amplitude of the photoemission signal (left ordinate axis) is increasing and the amplitude of the electron current (right ordinate) is decreasing. As a particular advantage of the invention, the relative modulation amplitude is increased from some % according to the technique described by P. Hommelhoff et al. in "Proceedings of the 2006 IEEE International Frequency Control Symposium" (cited above) to at least 30 %, if only electrons are detected having an energy above a predetermined threshold value. Accordingly, the photoemission signal can be used in an improved manner for stabilizing the laser source device 100. Furthermore, Figure 5 shows experimental results wherein the CE frequency has been measured both with a conventional f-2f-interferometer (dotted curve A) and with the inventive technique (solid curve B). The comparison of both measurements shows that the photoemission signal is varied with the same frequency (here: F_{CEO} = 0,2 Hz) like the correlation signal obtained with the f-2f-interferometer.

As a further advantage of the invention, it has been found that the sensitive and reproducible measurement of the CE phase is possible with a pulse energy below 125 pJ corresponding to an average power of about 10 mW. In other words, the pulse energy has been reduced by a factor of 10 compared with the conventional interferometric CE phase measurements. Accordingly, the sensor device can be provided with improved compactness and a larger portion of the laser pulses 1 can be used for subsequent applications, like e.g. measurements or interactions with solid matter.

## Claims

1. Method of sensing a carrier envelope characteristic of laser pulses (1) having a pulse duration below 25 fs, including the steps of:
- irradiating at least one emitter tip (211) of an electron emitter device (210) with the laser pulses (1), so that electrons are emitted from the at least one emitter tip (211), wherein the laser pulses (1) are focused onto the at least one emitter tip (211), said at least one emitter tip (211) having a tip radius equal or below 100 nm,
- detecting an electron current of the emitted electrons using an electron collector device (220), and
- generating a photoemission signal by the electron collector device (220), wherein the photoemission signal depends on the carrier envelope characteristic of the laser pulses (1),
**characterized in that**
- the laser pulses (1) have a pulse energy below 200 pJ, and
- the emitted electrons are subjected to an electrical field barrier created between the at least one emitter tip (211) of the electron emitter device (210) and the electron collector device (220).

2. Method according to claim 1, wherein
- the electrical field barrier is created with a direct voltage source with an amplitude selected in dependency on material and geometric features of the at least one emitter tip (211), and/or
- the at least one emitter tip (211) has a tip radius equal or below 50 nm.

3. Method according to one of the foregoing claims, wherein the laser pulses (1) have at least one of
- a pulse duration shorter than five optical carrier oscillation cycles,
- a pulse energy below 150 pJ, and
- a pulse intensity on the electron emitter device (210) below 10¹² W/cm².

4. Method of controlling a laser source device (100) creating laser pulses (1), including the steps of
- generating laser pulses (1) with the laser source device (100),
- detecting a carrier envelope characteristic of the laser pulses (1) using a method according to one of the foregoing claims, and
- controlling the laser source device (100) in dependency on the photoemission signal of the electron collector device (220).

5. Method according to claim 4, wherein
- the laser source device (100) is controlled such that the laser pulses (1) have a stabilized carrier envelope characteristic.

6. Method according to one of the foregoing claims, wherein
- the carrier envelope characteristic is at least one of the carrier envelope phase and the carrier envelope offset frequency.

7. Sensor device (200) configured for sensing a carrier envelope characteristic of laser pulses (1) having a pulse duration below 25 fs, including
- an electron emitter device (210) having at least one emitter tip (211), said at least one emitter tip (211) being arranged for emitting electrons in response to a focused irradiation with the laser pulses (1), said at least one emitter tip (211) having a tip radius equal or below 100 nm, and
- an electron collector device (220) being arranged for detecting an electron current of the emitted electrons and generating a photoemission signal depending on the carrier envelope characteristic of the laser pulses (1),
**characterized in that**
- the sensor device (200) is configured for sensing the carrier envelope characteristic of the laser pulses (1) having a pulse energy below 200 pJ,
- the electron collector device (220) includes a field barrier device (222) which is arranged between the at least one emitter tip (211) of the electron emitter device (210) and the electron collector device (220), wherein
- the electron collector device (220) with the field barrier device (222) are configured for subjecting electrons to be detected by the electron collector device (220) to an electrical field barrier.

8. Sensor device according to claim 7, wherein
- the at least one emitter tip (211) has at least one emitter tip (211) with a tip radius equal or below 50 nm.

9. Sensor device according to claim 8, wherein
- the at least one emitter tip (211) includes at least one metal rod tip, in particular made of tungsten, gold or hafnium carbide, or
- the at least one emitter tip (211) includes at least one nano-particle arranged on a carrier substrate, or
- the at least one emitter tip (211) includes at least one nano-needle arranged on a carrier substrate.

10. Sensor device according to claims 9, wherein
- the at least one metal rod tip is made of tungsten with 310, 111 or 110 orientation.

11. Sensor device according to one of the claims 7 to 10, wherein
- the electron collector device (220) comprises a collector electrode (221), a micro-channel plate (223) or an electron multiplier.

12. Sensor device according to one of the claims 7 to 11, wherein
- the field barrier device (222) comprises a mesh electrode, a grid electrode, or an electrode plate with a throughhole.

13. Sensor device according to one of the claims 7 to 12, wherein
- the electron emitter device (210) and the electron collector device (220) including the field barrier device (222) are arranged in a vacuum cell (230).

14. Pulse laser device (300), comprising
- a laser source device (100) being arranged for creating laser pulses (1), and
- a sensor device (200) according to one of the claims 7 to 13 being coupled with the laser source device (100) such that the laser source device (100) is controlled using the photo-emission signal.

15. Pulse laser device according to claim 14, wherein
- the laser source device (100) includes an adjustment device (112) which is configured for setting the carrier envelope phase of the laser pulses (1), and
- an output of the sensor device (200) is coupled with the adjustment device.

## Patentansprüche

1. Verfahren zur Erfassung einer Träger-Einhüllenden-Charakteristik von Laserpulsen (1), die eine Pulsdauer geringer als 25 fs aufweisen, mit den Schritten:
- Bestrahlung von mindestens einer Emitterspitze (211) einer Elektronenemittereinrichtung (210) mit den Laserpulsen (1), so dass von der mindestens einen Emitterspitze (211) Elektronen emittiert werden, wobei die Laserpulse (1) auf die mindestens eine Emitterspitze (211) fokussiert werden, wobei die mindestens eine Emitterspitze (211) einen Spitzenradius gleich oder geringer als 100 nm aufweist,
- Detektion eines Elektronenstroms der emittierten Elektronen, wobei eine Elektronenkollektoreinrichtung (220) verwendet wird, und
- Erzeugung eines Photoemissionssignals durch die Elektronenkollektoreinrichtung (220), wobei das Photoemissionssignal von der Träger-Einhüllenden-Charakteristik der Laserpulse (1) abhängt,
**dadurch gekennzeichnet, dass**
- die Laserpulse (1) eine Pulsenergie unterhalb 200 pJ aufweisen, und
- die emittierten Elektronen einer elektrischen Feldbarriere ausgesetzt werden, die zwischen der mindestens einen Emitterspitze (211) der Elektronenemittereinrichtung (210) und der Elektronenkollektoreinrichtung (220) erzeugt wird.

2. Verfahren gemäß Anspruch 1, wobei
- die elektrische Feldbarriere mit einer Gleichspannungsquelle mit einer Amplitude erzeugt wird, die in Abhängigkeit von Material- und Geometrie-Merkmalen der mindestens einen Emitterspitze (211) ausgewählt wird, und/oder
- die mindestens eine Emitterspitze (211) einen Spitzenradius gleich oder geringer als 50 nm aufweist.

3. Verfahren gemäß einem der vorhergehenden Ansprüche, wobei die Laserpulse (1) mindestens eines aufweisen von
- einer Pulsdauer geringer als fünf optische Träger-Oszillationszyklen,
- einer Pulsenergie geringer als 150 pJ, und
- einer Pulsintensität auf der Elektronenemittereinrichtung (210) unterhalb von 10¹² W/cm².

4. Verfahren zur Steuerung einer Laserquelleneinrichtung (100), die Laserpulse (1) erzeugt, mit den Schritten
- Erzeugung von Laserpulsen (1) mit der Laserquelleneinrichtung (100),
- Detektion einer Träger-Einhüllenden-Charakteristik der Laserpulse (1), wobei ein Verfahren gemäß einem der vorhergehenden Ansprüche verwendet wird, und
- Steuerung der Laserquelleneinrichtung (100) in Abhängigkeit von dem Photoemissionssignal der Elektronenkollektoreinrichtung (220).

5. Verfahren gemäß Anspruch 4, wobei
- die Laserquelleneinrichtung (100) derart gesteuert wird, dass die Laserpulse (1) eine stabilisierte Träger-Einhüllenden-Charakteristik aufweisen.

6. Verfahren gemäß einem der vorhergehenden Ansprüche,
wobei
- die Träger-Einhüllenden-Charakteristik mindestens eines von der Träger-Einhüllenden-Phase und der Träger-Einhüllenden-Offsetfrequenz ist.

7. Sensoreinrichtung (200), die zur Erfassung einer Träger-Einhüllenden-Charakteristik von Laserpulsen (1) konfiguriert ist, die eine Pulsdauer unterhalb von 25 fs aufweisen, enthaltend
- eine Elektronenemittereinrichtung (210), die mindestens eine Emitterspitze (211) aufweist, wobei die mindestens eine Emitterspitze (211) zur Emission von Elektronen in Reaktion auf eine fokussierte Bestrahlung mit den Laserpulsen (1) angeordnet ist, wobei die mindestens eine Emitterspitze (211) einen Spitzenradius gleich oder geringer als 100 nm aufweist, und
- eine Elektronenkollektoreinrichtung (220), die zur Detektion eines Elektronenstroms der emittierten Elektronen und zur Erzeugung eines Photoemissionssignals angeordnet ist, das von der Träger-Einhüllenden-Charakteristik der Laserpulse (1) abhängt,
**dadurch gekennzeichnet, dass**
- die Sensoreinrichtung (200) zur Erfassung der Träger-Einhüllenden-Charakteristik der Laserpulse (1) konfiguriert ist, die eine Pulsenergie unterhalb von 200 pJ aufweisen,
- die Elektronenkollektoreinrichtung (220) eine Feldbarriereneinrichtung (222) enthält, die zwischen der mindestens einen Emitterspitze (211) der Elektronenemittereinrichtung (210) und der Elektronenkollektoreinrichtung (220) angeordnet ist, wobei
- die Elektronenkollektoreinrichtung (220) mit der Feldbarriereneinrichtung (222) konfiguriert sind, Elektronen, die durch die Elektronenkollektoreinrichtung (220) detektiert werden sollen, einer elektrischen Feldbarriere auszusetzen.

8. Sensoreinrichtung gemäß Anspruch 7, wobei
- die mindestens eine Emitterspitze (211) mindestens eine Emitterspitze (211) mit einem spitzen Radius gleich oder geringer als 50 nm aufweist.

9. Sensoreinrichtung gemäß Anspruch 8, wobei
- die mindestens eine Emitterspitze (211) mindestens eine Metallstabspitze, die insbesondere aus Wolfram, Gold oder Hafnuimkarbid hergestellt ist, umfasst, oder
- die mindestens eine Emitterspitze (211) mindestens einen Nano-Partikel enthält, der auf einem Trägersubstrat angeordnet ist, oder
- die mindestens eine Emitterspitze (211) mindestens eine Nano-Nadel umfasst, die auf einem Trägersubstrat angeordnet ist.

10. Sensoreinrichtung gemäß Anspruch 9, wobei
- die mindestens eine Metallstabspitze aus Wolfram mit 310-, 111- oder 110-Orientierung hergestellt ist.

11. Sensoreinrichtung gemäß einem der Ansprüche 7 bis 10, wobei
- die Elektronenkollektoreinrichtung (220) eine Kollektorelektrode (221), eine Mikrokanalplatte (223) oder einen Elektronenvervielfacher umfasst.

12. Sensoreinrichtung gemäß einem der Ansprüche 7 bis 11, wobei
- die Feldbarriereneinrichtung (222) eine Netzelektrode, eine Gitterelektrode oder eine Elektrodenplatte mit einer Durchgangsöffnung umfasst.

13. Sensoreinrichtung gemäß einem der Ansprüche 7 bis 12, wobei
- die Elektronenemittereinrichtung (210) und die Elektronenkollektoreinrichtung (220), einschließlich die Feldbarriereneinrichtung (222), in einer Vakuumzelle (230) angeordnet sind.

14. Pulslasereinrichtung (300), umfassend
- eine Laserquelleneinrichtung (100), die zur Erzeugung von Laserpulsen (1) angeordnet ist, und
- eine Sensoreinrichtung (200) gemäß einem der Ansprüche 7 bis 13, die mit der Laserquelleneinrichtung (100) derart gekoppelt ist, dass die Laserquelleneinrichtung (100) unter Verwendung des Photoemissionssignals gesteuert wird.

15. Pulslasereinrichtung gemäß Anspruch 14, wobei
- die Laserquelleneinrichtung (100) eine Justiereinrichtung (112) enthält, die zur Einstellung der Träger-Einhüllenden-Phase der Laserpulse (1) konfiguriert ist, und
- ein Ausgang der Sensoreinrichtung (200) mit der Justiereinrichtung gekoppelt ist.

## Revendications

1. Procédé de détection d'une caractéristique d'enveloppe de porteuse d'impulsions laser (1) possédant une durée d'impulsion inférieure à 25 fs, comprenant les étapes de :
- l'irradiation d'au moins une pointe d'émetteur (211) d'un dispositif émetteur d'électrons (210) avec les impulsions laser (1), pour que des électrons soient émis à partir de l'au moins une pointe d'émetteur (211), dans lequel les impulsions laser (1) sont concentrées sur l'au moins une pointe d'émetteur (211), ladite au moins une pointe d'émetteur (211) possédant un rayon de pointe égal ou inférieur à 100 nm,
- la détection d'un courant électronique des électrons émis en utilisant un dispositif collecteur d'électrons (220), et
- la génération d'un signal de photoémission par le dispositif collecteur d'électrons (220), dans lequel le signal de photoémission dépend de la caractéristique d'enveloppe de porteuse des impulsions laser (1),
**caractérisé en ce que**
- les impulsions laser (1) possèdent une énergie d'impulsion inférieure à 200 pJ, et
- les électrons émis sont soumis à une barrière de champ électrique créée entre l'au moins une pointe d'émetteur (211) du dispositif émetteur d'électrons (210) et le dispositif collecteur d'électrons (220).

2. Procédé selon la revendication 1, dans lequel
- la barrière de champ électrique est créée avec une source de tension continue avec une amplitude sélectionnée en fonction de particularités matérielles et géométriques de l'au moins une pointe d'émetteur (211), et/ou
- l'au moins une pointe d'émetteur (211) possède un rayon de pointe égal ou inférieur à 50 nm.

3. Procédé selon une des revendications précédentes, dans lequel les impulsions laser (1) possèdent au moins une de
- une durée d'impulsion plus courte que cinq cycles d'oscillation de porteuse optique,
- une énergie d'impulsion inférieure à 150 pJ, et
- une intensité d'impulsion sur le dispositif émetteur d'électrons (210) inférieure à 10¹² W/cm².

4. Procédé de commande d'un dispositif à source laser (100) créant des impulsions laser (1), comprenant les étapes de :
- la génération d'impulsions laser (1) avec le dispositif à source laser (100),
- la détection d'une caractéristique d'enveloppe de porteuse des impulsions laser (1) en utilisant un procédé selon une des revendications précédentes, et
- la commande du dispositif à source laser (100) en fonction du signal de photoémission du dispositif collecteur d'électrons (220).

5. Procédé selon la revendication 4, dans lequel
- le dispositif à source laser (100) est commandé de sorte que les impulsions laser (1) présentent une caractéristique d'enveloppe de porteuse stabilisée.

6. Procédé selon une des revendications précédentes, dans lequel
- la caractéristique d'enveloppe de porteuse est au moins une de la phase d'enveloppe de porteuse et la fréquence décalée d'enveloppe de porteuse.

7. Dispositif capteur (200) configuré pour détecter une caractéristique d'enveloppe de porteuse d'impulsions laser (1) possédant une durée d'impulsion inférieure à 25 fs, comprenant
- un dispositif émetteur d'électrons (210) possédant au moins une pointe d'émetteur (211), ladite au moins une pointe d'émetteur (211) étant agencée pour émettre des électrons en réponse à une irradiation concentrée avec les impulsions laser (1), ladite au moins une pointe d'émetteur (211) possédant un rayon de pointe égal ou inférieur à 100 nm, et
- un dispositif collecteur d'électrons (220) agencé pour détecter un courant électronique des électrons émis et générant un signal de photoémission en fonction de la caractéristique d'enveloppe de porteuse des impulsions laser (1),
**caractérisé en ce que**
- le dispositif capteur (200) est configuré pour détecter la caractéristique d'enveloppe de porteuse des impulsions laser (1) possédant une énergie d'impulsion inférieure à 200 pJ,
- le dispositif collecteur d'électrons (220) comprend un dispositif à barrière de champ (222) qui est agencé entre l'au moins une pointe d'émetteur (211) du dispositif émetteur d'électrons (210) et le dispositif collecteur d'électrons (220), dans lequel
- le dispositif collecteur d'électrons (220) avec le dispositif à barrière de champ (222) sont configurés pour soumettre des électrons destinés à être détectés par le dispositif collecteur d'électrons (220) à une barrière de champ électrique.

8. Dispositif capteur selon la revendication 7, dans lequel
- l'au moins une pointe d'émetteur (211) comporte au moins une pointe d'émetteur (211) avec un rayon de pointe égal ou inférieur à 50 nm.

9. Dispositif capteur selon la revendication 8, dans lequel
- l'au moins une pointe d'émetteur (211) comprend au moins une pointe de tige métallique, en particulier faite de tungstène, d'or ou de carbure de hafnium, ou
- l'au moins une pointe d'émetteur (211) comprend au moins une nanoparticule agencée sur un substrat support, ou
- l'au moins une pointe d'émetteur (211) comprend au moins une nano-aiguille agencée sur un substrat support.

10. Dispositif capteur selon la revendication 9, dans lequel
- l'au moins une pointe de tige métallique est faite de tungstène avec une orientation 310, 111 ou 110.

11. Dispositif capteur selon une des revendications 7 à 10, dans lequel
- le dispositif collecteur d'électrons (220) comprend une électrode collectrice (221), une plaque à micro-canal (223) ou un multiplicateur d'électrons.

12. Dispositif capteur selon une des revendications 7 à 11, dans lequel
- le dispositif à barrière de champ (222) comprend une électrode à mailles, une électrode à grille, ou une plaque électrode avec un trou débouchant.

13. Dispositif capteur selon une des revendications 7 à 12, dans lequel
- le dispositif émetteur d'électrons (210) et le dispositif collecteur d'électrons (220) comprenant le dispositif à barrière de champ (222) sont agencés dans une cellule sous vide (230).

14. Dispositif laser à impulsions (300), comprenant
- un dispositif à source laser (100) agencé pour créer des impulsions laser (1), et
- un dispositif capteur (200) selon une des revendications 7 à 13 couplé avec le dispositif à source laser (100) de sorte que le dispositif à source laser (100) soit commandé en utilisant le signal de photoémission.

15. Dispositif laser à impulsions selon la revendication 14, dans lequel
- le dispositif à source laser (100) comprend un dispositif de réglage (112) qui est configuré pour régler la phase d'enveloppe de porteuse des impulsions laser (1), et
- une sortie du dispositif capteur (200) est couplée avec le dispositif de réglage.
